# FASCICULE DE BREVET EUROPEEN

(11) **EP 0 551 681 B1**
(45) Date de publication et mention de la délivrance du brevet: **02.07.1997**
(21) Numéro de dépôt: 92204109.0
(22) Date de dépôt: 29.12.1992
(51) Int. Cl.: C08F 6/10

(54) **Procédé continu pour éliminer le ou les monomères résiduels d'un latex aqueux d'un polymère synthétique et dispositif pour sa réalisation**
Verfahren zum Entfernen von Restmonomeren aus einem wässrigen Latex eines synthetischen Polymers und Vorrichtung zur Durchführung dieses Verfahrens
Continuous process for removing residual monomer(s) from an aqueous latex of a synthetic polymer and apparatus therefor

(30) Priorité: 13.01.1992 BE 9200027
(43) Date de publication de la demande: 21.07.1993
(73) Titulaire: SOLVAY (Société Anonyme), B-1050 Bruxelles (BE)
(72) Inventeur: Bindelle, Jean-Paul, B-1435 Mont-Saint-Guibert (BE)
(74) Mandataire: Dufrasne, Eugène

(56) Documents cités:
- EP-A- 0 352 727
- FR-A- 2 148 053
- US-A- 4 130 527

## Description

La présente invention concerne un procédé pour éliminer le ou les monomères résiduels présents dans un latex aqueux de polymère synthétique provenant d'une installation de fabrication ainsi qu'un dispositif convenant particulièrement pour la réalisation de ce procédé.

La production d'un latex de polymère synthétique est normalement effectuée par polymérisation du ou des monomères constituant le polymère en utilisant un procédé classique de polymérisation en émulsion ou en microsuspension.

Le latex obtenu selon un tel procédé contient généralement, même après dégazage classique en fin de réaction de polymérisation, une quantité appréciable de monomère(s) résiduel(s) qui sont soit dissous dans la phase aqueuse, soit absorbés ou occlus par les particules de polymère.

Il est toutefois souvent désirable d'éliminer pratiquement toute trace de monomère(s) dans le latex produit, en particulier si la qualité du polymère s'en trouve améliorée, si le ou les monomères sont coûteux justifiant dans ce cas une récupération ou encore si la présence de monomère(s), même en quantités minimes, constitue un danger tel qu'un risque de toxicité ou un risque d'explosion.

A cet effet, il a déjà été proposé, notamment dans les documents DE-A-2 162 860, BE-A-847 198, DE-A-2 531 429 et US-A-4 130 527, d'éliminer les monomères résiduels contenus dans un latex par traitement direct de ceux-ci par injection d'un gaz inerte saturé en humidité, ledit traitement étant effectué soit dans un évaporateur à tubes verticaux, soit dans un cylindre incliné mis en rotation ou encore dans une colonne à film mince tombant. Il a toutefois été constaté que ces techniques ne permettent généralement pas une élimination efficace du ou des monomères du latex traité et/ou peuvent altérer la stabilité thermique ou mécanique (coagulation) du polymère traité. En outre, ces techniques entraînent souvent des problèmes dus au moussage du latex.

Il a maintenant été trouvé un procédé original de traitement de latex qui permet de garantir une productivité élevée tout en conservant, voire même en améliorant la stabilité thermique du polymère traité et ce, en éliminant pratiquement les problèmes de moussage.

La présente invention concerne, dès lors, à titre principal un procédé continu pour éliminer le ou les monomères résiduels d'un latex aqueux d'un polymère synthétique provenant d'une installation de fabrication, qui se caractérise en ce qu'on traite ledit latex par passage dans un échangeur de chaleur constitué par une enceinte fermée divisée en deux parties distinctes superposées, la partie supérieure dégagée étant mise en dépression et étant en relation avec une installation de récupération du ou des monomères résiduels et la partie inférieure étant équipée d'un cloisonnement délimitant deux circuits séparés allongés et contigus sous la forme d'une double spirale, un des circuits étant parcouru par le latex à traiter et étant maintenu en relation, par sa partie supérieure et sur tout son parcours, avec la partie supérieure de l'enceinte et l'autre circuit, isolé de la partie supérieure de l'enceinte, étant parcouru par un fluide caloporteur maintenu à une température de 40 à 100°C et, de préférence, de 60 à 100°C.

Dans le procédé conforme à l'invention, le latex à traiter est soumis à une circulation régulière et constante le long de son circuit et est progressivement porté puis maintenu à sa température d'ébullition dans les conditions de vide régnant dans l'enceinte de façon à assurer l'élimination du ou des monomères et éventuellement d'autres composants volatils tels que des solvants. En outre, comme le transfert de chaleur est assuré au travers de la cloison délimitant les circuits, il n'y a aucun contact direct et brusque avec le fluide caloporteur. Afin d'assurer un échauffement progressif du latex à traiter, il peut d'ailleurs se révéler très avantageux de faire circuler le latex à traiter et le fluide caloporteur dans des sens opposés dans leur circuit respectif.

Dans le procédé conforme à l'invention, le latex à traiter peut en outre avantageusement être préchauffé à une température de 30 à 90°C avant son introduction dans l'enceinte. Ce préchauffage peut, en particulier, être réalisé par passage de ce latex dans un échangeur de chaleur classique. A titre de fluide caloporteur, lors de ce préchauffage, on peut avantageusement utiliser le latex traité sortant de l'enceinte. De cette façon, le latex quittant l'enceinte est progressivement refroidi et les calories ainsi libérées sont exploitées économiquement pour le préchauffage du latex pénétrant dans l'enceinte de traitement.

Dans le procédé conforme à l'invention, la partie supérieure de l'enceinte est de préférence maintenue sous une dépression de 0,01 à 0,99 bar et, de préférence, de 0,1 à 0,9 bar. En général, il existe une dépression optimum permettant d'assurer l'ébullition à une température suffisante pour permettre l'élimination complète des monomères sans diminuer la stabilité mécanique du latex et les caractéristiques du produit fini.

Le fluide caloporteur introduit dans l'enceinte peut être quelconque mais, pour des raisons économiques, on préfère généralement utiliser de l'eau.

Dans le procédé selon l'invention, la section utile et la longueur du circuit parcouru par le latex à traiter sont choisies de façon à assurer un temps prédéterminé de séjour du latex dans l'enceinte, de 1 à 30 minutes avec un débit de 1 à 10 m³/h.

Le procédé permet, dès lors, un temps de traitement du latex relativement court avec pour avantage que ce traitement ne dégrade pas la qualité du latex du fait d'un apport excessif de calories.

Par ailleurs, dans le procédé selon l'invention, le rapport entre la surface d'évaporation et le volume du latex traité est très élevé et, dès lors, le risque de moussage du latex traité est réduit.

Le procédé conforme à l'invention convient particulièrement pour traiter des latex de polymères à base de chlorure de vinyle produits par polymérisation en émulsion ou en microsuspension mais il peut évidemment être exploité pour traiter d'autres latex tels que notamment des latex de caoutchouc ou de polymères dérivés d'autres monomères.

Dans le procédé conforme à l'invention, le ou les monomères éliminés ainsi que les autres constituants, tels des solvants, sont, de préférence, captés et recueillis dans des installations de récupération ou de neutralisation plutôt que rejetés dans l'atmosphère.

A titre secondaire, la présente invention concerne également un dispositif conçu particulièrement pour la réalisation du procédé décrit ci-avant.

La présente invention concerne donc également un dispositif particulier qui se caractérise en ce qu'il est constitué par une enceinte fermée divisée en deux parties distinctes superposées, la partie supérieure dégagée étant raccordée à une source de vide en relation avec une installation de récupération du ou des monomères et la partie inférieure étant équipée d'un cloisonnement délimitant deux circuits séparés, allongés et contigus sous la forme d'une double spirale, un des circuits, destiné à être parcouru par le latex à traiter, étant maintenu en relation, par sa face supérieure, avec la partie supérieure de l'enceinte sur la totalité de son parcours et l'autre circuit, destiné à être parcouru par un fluide caloporteur, étant isolé de la partie supérieure de l'enceinte.

L'enceinte qui doit être étanche et qui est, de préférence, isolée thermiquement peut se présenter sous une forme quelconque, une forme générale cylindrique étant habituellement préférée pour des raisons d'encombrement. Dans une forme de réalisation préférée, l'enceinte est constituée par une enveloppe métallique de forme générale cylindrique surmontée par une partie en dôme qui délimite deux parties superposées distinctes, la partie supérieure via le dôme étant raccordée à la source de vide en relation avec l'installation de récupération.

Le cloisonnement disposé dans la partie inférieure de l'enceinte pour délimiter les deux circuits peut être quelconque pour autant qu'il permette la réalisation de deux circuits séparés allongés et contigus répondant aux caractéristiques précisées ci-avant. Les circuits ainsi délimités doivent être dépourvus d'angles vifs pouvant créer des mouvements perturbés ou des zones de stagnation notamment dans le latex véhiculé, et sont ainsi délimités par un cloisonnement disposé sous la forme d'une double spirale. Le cloisonnement est généralement métallique et sa surface en contact avec le latex à traiter est, de préférence, polie. Pour éviter tout dépôt sur la surface du cloisonnement en contact avec le latex à traiter il peut, en outre, se révéler avantageux de revêtir cette surface par une pellicule d'un polymère favorisant le glissement tel qu'un polymère fluoré comme, par exemple, un polymère à base de fluorure de vinylidène.

Les deux circuits sont équipés de moyens, tels que des conduites équipées de vannes, pour introduire et retirer les fluides, latex à traiter et fluide caloporteur, qu'ils doivent véhiculer, ces moyens étant, de préférence, disposés de façon telle que ces fluides parcourent leur circuit respectif dans des sens opposés.

En général, la demanderesse préfère que les deux circuits soient disposés et agencés de façon telle que la surface d'échange thermique soit au moins égale à 10 m². Des surfaces d'échange de 10 à 60 m² sont habituellement utilisées mais des surfaces d'échange plus élevées ne sont pas exclues pour des installations devant assurer de grands débits.

Les latex traités pouvant comporter à l'entrée des particules ayant tendance à décanter, il peut se révéler utile de prévoir des moyens dans la partie inférieure du circuit parcouru par le latex pour permettre une purge périodique de ce circuit en vue d'éliminer ces décantats.

De même, bien que le procédé et le dispositif permettent normalement de traiter des latex sans formation indésirée de mousses, il peut néanmoins être utile de prévoir dans le dôme de l'enceinte des moyens pour introduire un agent anti-moussant dans le latex traité et/ou des moyens de démoussage mécanique par exemple du type à turbine.

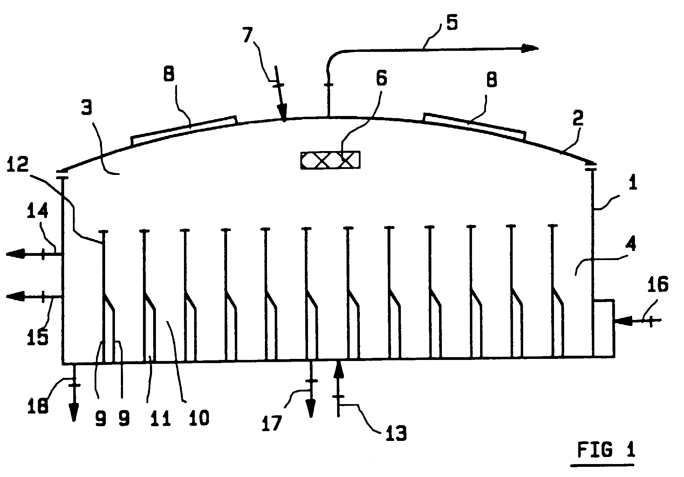

Le dispositif conforme à l'invention est, par ailleurs, explicité plus en détail dans la description qui va suivre d'un mode de réalisation préférentiel et dans laquelle on se réfèrera à la figure 1 annexée qui illustre schématiquement ce dispositif en élévation et en coupe.

Ainsi qu'il apparaît sur la fig. 1, un dispositif conforme à l'invention est constitué par une enceinte métallique 1 de forme générale cylindrique surmontée d'un dôme 2.

L'enceinte comporte une partie supérieure 3 qui est dégagée et qui est raccordée via le sommet du dôme 2 à une canalisation 5 raccordée à une source de vide, non représentée, en relation avec une installation de récupération du ou des monomères, également non représentée.

La partie supérieure peut encore être équipée d'un moyen de démoussage mécanique 6.

Enfin, le dôme peut être équipé d'un moyen 7 pour injecter un agent anti-moussant et de fenêtres 8 permettant une inspection visuelle de l'enceinte.

La partie inférieure 4 de l'enceinte 1 est équipée d'un cloisonnement métallique 9 disposé en double spirale qui délimite deux circuits 10 et 11 séparés, allongés et contigus. Un des circuits 10, destiné à être parcouru par le latex à traiter, est en relation par sa partie supérieure et sur toute sa longueur avec la partie supérieure 3 de l'enceinte 1. L'autre circuit 11, destiné à être parcouru par le fluide caloporteur, est isolé de la partie supérieure 3 de l'enceinte 1.

Le circuit 11 présente une hauteur de l'ordre de 50 à 1000 mm et une largeur de 10 à 30 mm tandis que le circuit 10, avantageusement prolongé par un baffle 12, a une hauteur de l'ordre de 50 à 1500 mm et une largeur de 10 à 40 mm, les valeurs données ci-avant n'étant nullement restrictives.

Il est toutefois préféré que la hauteur du latex dans le circuit 10 soit supérieure à celle du circuit 11 compte tenu du fait que lors du fonctionnement il est souhaitable que le niveau du latex traité soit tel que le circuit 11 soit toujours complètement immergé dans le latex. Dans le cas contraire, il existe en effet un risque de séchage du latex sur les parois chaudes du circuit 11 véhiculant le fluide caloporteur pouvant entraîner la formation de peaux difficiles à éliminer.

Le latex à traiter est introduit dans le circuit 10 par le centre de l'enceinte 1 via la conduite 13 et est extrait par débordement sur la périphérie de l'enceinte 1 via les conduites étagées 14 ou 15 qui sont respectivement utilisées suivant le débit imposé au dispositif.

Par contre, le fluide caloporteur est introduit dans le circuit 11 par sa périphérie via la conduite 16 et est extrait du dispositif par le centre de l'enceinte 1 via la conduite 17.

De cette façon, le latex à traiter et le fluide caloporteur circulent en sens contraire dans leur circuit respectif ce qui permet un échauffement plus régulier du latex à traiter. Il est toutefois bien évident que les sens de circulation du latex à traiter et du fluide caloporteur pourraient être inversés sans changer fondamentalement le procédé.

Enfin, une conduite de purge 18 peut être prévue dans le fond du circuit 10, de préférence, en fin de parcours du latex à traiter, cette conduite de purge permettant éventuellement une élimination périodique de microcoagulats accidentellement formés ou présents dans le latex traité.

La demanderesse donne par ailleurs, ci-après et à titre indicatif, des données précises sur un dispositif prévu pour le traitement d'un latex d'un polymère à base de chlorure de vinyle ainsi que sur son mode de fonctionnement.
Hauteur de l'enceinte 1 : 1600 mm
Diamètre de l'enceinte : 2000 mm
Longueur des circuits 10 et 11 : 60 m.
Largeur du circuit 10 : 30 mm
Hauteur du circuit 10 : 600 mm
Largeur du circuit 11 : 10 mm
Hauteur du circuit 11 : 250 mm
Température d'entrée du latex préchauffé : 70°C
Température du latex à la sortie de l'enceinte : 80°C
Débit du latex : 2,5 T/h.
niveau du latex dans le circuit 10 : 250 mm
Pression dans l'enceinte 1 : 0,47 bar
Vitesse du latex dans le circuit 10 : 0,08 m/s
Durée de séjour du latex dans l'enceinte : 12,5 min.
Puissance thermique transférée : 94000 kcal/h.

## Revendications

1. Procédé continu pour éliminer le ou les monomères résiduels d'un latex aqueux d'un polymère synthétique provenant d'une installation de fabrication caractérisé en ce qu'on traite ledit latex par passage dans un échangeur de chaleur constitué par une enceinte fermée divisée en deux parties distinctes superposées, la partie supérieure dégagée étant mise en dépression et étant en relation avec une installation de récupération du ou des monomères résiduels et la partie inférieure étant équipée d'un cloisonnement délimitant deux circuits séparés allongés et contigus sous la forme d'une double spirale, un des circuits étant parcouru par le latex à traiter et étant maintenu en relation, par sa partie supérieure et sur tout son parcours, avec la partie supérieure de l'enceinte et l'autre circuit, isolé de la partie supérieure de l'enceinte, étant parcouru par un fluide caloporteur maintenu à une température de 40 à 100°C.

2. Procédé selon la revendication 1 caractérisé en ce que le latex à traiter et le fluide caloporteur parcourent leur circuit respectif dans des sens opposés.

3. Procédé selon la revendication 1 caractérisé en ce que le latex est préchauffé à une température de 30 à 90°C avant son introduction dans l'enceinte, de préférence, par échange thermique avec le latex traité extrait de ladite enceinte.

4. Procédé selon la revendication 1 caractérisé en ce que la partie supérieure de l'enceinte est maintenue sous une dépression de 0,01 à 0,99 bar.

5. Procédé selon la revendication 1 caractérisé en ce que le fluide caloporteur est de l'eau.

6. Procédé selon la revendication 1 caractérisé en ce que la section utile et la longueur du circuit parcouru par le latex sont choisies de façon à assurer un temps prédéterminé de passage du latex dans l'enceinte de 1 à 30 minutes sous un débit de 1 à 10 m³ par heure.

7. Dispositif pour la réalisation du procédé selon l'une quelconque des revendications 1 à 6 caractérisé en ce qu'il est constitué par une enceinte fermée divisée en deux parties distinctes superposées, la partie supérieure dégagée étant raccordée à une source de vide en relation avec une installation de récupération du ou des monomères et la partie inférieure étant équipée d'un cloisonnement délimitant deux circuits séparés allongés et contigus sous la forme d'une double spirale, un des circuits, destiné à être parcouru par le latex à traiter, étant maintenu en relation, par sa face supérieure, avec la partie supérieure de l'enceinte sur la totalité de son parcours et l'autre circuit, destiné à être parcouru par un fluide caloporteur, étant isolé de la partie supérieure de l'enceinte.

8. Dispositif selon la revendication 7 caractérisé en ce que la surface d'échange thermique entre les deux circuits contigus est de 10 à 60 m².

9. Dispositif selon la revendication 7 caractérisé en ce que le circuit destiné à être parcouru par le latex à traiter est équipé, dans sa partie inférieure, de moyens permettant une purge périodique pour éliminer d'éventuels décantats présents dans le latex.

## Patentansprüche

1. Kontinuierliches Verfahren zum Entfernen des oder der Restmonomere aus einem wäßrigen Latex eines synthetischen Polymers, das aus einer Produktionsanlage stammt, dadurch gekennzeichnet, daß man besagten Latex unter Durchfluß in einem Wärmetauscher behandelt, der aus einem geschlossenen Raum besteht, der in zwei verschiedene übereinanderliegende Teile geteilt ist, wobei der obere freie Teil unter Unterdruck gesetzt wird und mit einer Vorrichtung zur Wiedergewinnung des oder der Restmonomere in Verbindung steht und der untere Teil mit einer Abtrennung ausgestattet ist, die zwei getrennte, längliche und aneinandergrenzende Kreisläufe in Form einer Doppelspirale begrenzt, wobei einer der Kreisläufe von dem zu behandelnden Latex durchflossen wird und über seinen oberen Teil und auf seinem ganzen Verlauf mit dem oberen Teil des Raums in Verbindung gehalten wird und der andere Kreislauf, der von dem oberen Teil des Raums isoliert ist, von einer auf einer Temperatur von 40 bis 100 °C gehaltenen wärmeübertragenden Flüssigkeit durchflossen wird.

2. Verfahren gemäß Anspruch 1, dadurch gekennzeichnet, daß der zu behandelnde Latex und die wärmeübertragende Flüssigkeit ihren jeweiligen Kreislauf in entgegengesetzten Richtungen durchlaufen.

3. Verfahren gemäß Anspruch 1, dadurch gekennzeichnet, daß der Latex vor seiner Einführung in den Raum vorzugsweise durch Wärmeaustausch mit dem aus besagtem Raum entnommenen behandelten Latex auf eine Temperatur von 30 bis 90 °C vorgewärmt wird.

4. Verfahren gemäß Anspruch 1, dadurch gekennzeichnet, daß der obere Teil des Raums unter einem Unterdruck von 0,01 bis 0,99 bar gehalten wird.

5. Verfahren gemäß Anspruch 1, dadurch gekennzeichnet, daß die wärmeübertragende Flüssigkeit Wasser ist.

6. Verfahren gemäß Anspruch 1, dadurch gekennzeichnet, daß der Nutzquerschnitt und die Länge des von dem Latex durchflossenen Kreislaufs so ausgewählt sind, daß eine vorher festgelegte Zeit für den Latexdurchgang in dem Raum von 1 bis 30 Minuten unter einem Durchsatz von 1 bis 10 m³ pro Stunde gewährleistet wird.

7. Vorrichtung zur Durchführung des Verfahrens gemäß einem der Ansprüche 1 bis 6, dadurch gekennzeichnet, daß sie aus einem geschlossenen Raum besteht, der in zwei verschiedene übereinanderliegende Teile getrennt ist, wobei der obere freie Teil in Verbindung mit einer Vorrichtung zur Rückgewinnung des oder der Monomere an eine Vakuumquelle angeschlossen ist und der untere Teil mit einer Abtrennung ausgestattet ist, die zwei getrennte längliche und aneinandergrenzende Kreisläufe in Form einer Doppelspirale begrenzt, wobei einer der Kreisläufe, der dazu bestimmt ist, vom zu behandelnden Latex durchflossen zu werden, durch seine Oberseite mit dem oberen Teil des Raums auf seinem gesamten Verlauf in Verbindung gehalten wird und der andere Kreislauf, der dazu bestimmt ist, von einer wärmeübertragenden Flüssigkeit durchflossen zu werden, von dem oberen Teil des Raums isoliert ist.

8. Vorrichtung gemäß Anspruch 7, dadurch gekennzeichnet, daß die Oberfläche zum Wärmeaustausch zwischen den beiden aneinandergrenzenden Kreisläufen 10 bis 60 m² beträgt.

9. Vorrichtung gemäß Anspruch 7, dadurch gekennzeichnet, daß der Kreislauf, der dazu bestimmt ist, von dem zu behandelnden Latex durchflossen zu werden, in seinem unteren Teil mit Mitteln ausgestattet ist, die eine periodische Entleerung ermöglichen, um eventuelle, in dem Latex vorhandene Ablagerungen zu entfernen.

## Claims

1. Continuous process for removing the residual monomer or monomers from an aqueous latex of a synthetic polymer originating from a manufacturing plant, characterised in that the said latex is treated by passage through a heat exchanger consisting of a closed chamber divided into two distinct superposed parts, the unobstructed upper part being placed under reduced pressure and communicating with a plant for recovery of the residual monomer or monomers, and the lower part being equipped with a partitioning bounding two separate extended and adjoining circuits in the form of a double spiral, one of the circuits being traversed by the latex to be treated and being maintained in communication, via its top and over its entire path, with the upper part of the chamber, and the other circuit, isolated from the upper part of the chamber, being traversed by a heat-transfer fluid maintained at a temperature of 40 to 100°C.

2. Process according to Claim 1, characterised in that the latex to be treated and the heat-transfer fluid traverse their respective circuits in opposite directions.

3. Process according to Claim 1, characterised in that the latex is preheated to a temperature of 30 to 90°C before its introduction into the chamber, preferably by heat exchange with the treated latex extracted from the said chamber.

4. Process according to Claim 1, characterised in that the upper part of the chamber is maintained under a reduced pressure of 0.01 to 0.99 bar.

5. Process according to Claim 1, characterised in that the heat-transfer fluid is water.

6. Process according to Claim 1, characterised in that the useful cross-section and the length of the circuit traversed by the latex are chosen in such a way as to provide for a predetermined time of passage of the latex through the chamber of 1 to 30 minutes with a flow rate of 1 to 10 m³ per hour.

7. Device for carrying out the process according to any one of Claims 1 to 6, characterised in that it consists of a closed chamber divided into two distinct superposed parts, the unobstructed upper part being connected to a vacuum source in communication with a plant for recovery of the monomer or monomers, and the lower part being equipped with a partitioning bounding two separate extended and adjoining circuits in the form of a double spiral, one of the circuits, intended for being traversed by the latex to be treated, being maintained in communication via its top face with the upper part of the chamber over the whole of its path, and the other circuit, intended for being traversed by a heat-transfer fluid, being isolated from the upper part of the chamber.

8. Device according to Claim 7, characterised in that the heat-exchange surface area between the two adjoining circuits is 10 to 60 m².

9. Device according to Claim 7, characterised in that the circuit intended for being traversed by the latex to be treated is equipped in its lower part with means enabling a periodic bleeding to be carried out in order to remove possible settled material present in the latex.
